# EUROPÄISCHE PATENTSCHRIFT

(11) **EP 0 521 247 B1**
(45) Veröffentlichungstag und Bekanntmachung des Hinweises auf die Patenterteilung: **27.12.1995**
(21) Anmeldenummer: 92105866.5
(22) Anmeldetag: 04.04.1992
(51) Int. Cl.: H02G 3/04

(54) **Kabelführungsrohrbündel aus einer Mehrzahl von Kunststoffrohren**
Cable tubings bundle composed of a plurality of synthetic tubes
Faisceau de conduits pour câbles composé d'une pluralité de tubes en plastique

(30) Priorität: 29.06.1991 DE 4121657; 02.07.1991 EP 91110915
(43) Veröffentlichungstag der Anmeldung: 07.01.1993
(73) Patentinhaber: Dipl.-Ing. Dr. Ernst Vogelsang GmbH & Co. KG, D-45699 Herten (DE)
(72) Erfinder: Vogelsang, Horst, W-4352 Herten (DE)
(74) Vertreter: Andrejewski, Walter

(56) Entgegenhaltungen:
- EP-A- 0 231 504
- GB-A- 2 183 000

## Beschreibung

Die Erfindung betrifft ein Kabelführungsrohrbündel aus einer Mehrzahl von Kunststoffrohren, die mit Hilfe von angeformten und verformbaren längslaufenden Verbindungsstegen vereinigt und zu einem ebenen Rohraggregat mit zwei Außenrohren entbündelbar sind. - Das Rohraggregat und damit das Kabelführungsrohrbündel können aus zwei, drei oder auch mehr als drei Rohren bestehen.

Kabelführungsrohrbündel werden für elektrische Kabel, Glasfaserkabel und dergleichen eingesetzt und zumeist unter der Erdoberfläche verlegt. Erdverlegt gehen Sie regelmäßig von Kabelschächten aus und münden sie in Kabelschächten, Hauseinführungen oder dergleichen. Erdverlegte Kabelführungsrohrbündel sind gleichzeitig wegweisende Inhomogenitäten im Erdreich, die gleichsam Wasserschleichwege oder sogar Wasserleitwege für Grundwasser und eindringendes Oberflächenwasser darstellen, welches störend in Kabelschächte, Hauseinführungen und dergleichen eindringen kann. Andererseits müssen die Kabelführungsrohrbündel im verlegten Zustand insgesamt hinreichend flexibel sein, um in Erdsenkungsgebieten und dergleichen Verformungen ohne zu brechen aufnehmen zu können. Die Rohraggregate werden im ebenen Zustand extrudiert, zu einem Coil aufgewickelt, als Coil transportiert und am Einbauort vom Coil abgezogen, zum Kabelführungsrohrbündel zusammengelegt und verlegt. Sie müssen in Störungsfällen aufgenommen und entbündelt werden.

Wird ein Rohraggregat zu einem Kabelführungsrohrbündel zusammengelegt, so kann ohne weiteres Grundwasser und in das Erdreich einsickerndes Oberflächenwasser auch in die Spalträume und Zwischenräume zwischen den einzelnen Kunststoffrohren eindringen, was im Sinne der vorstehenden Erläuterungen besonders stört. Ein Kabelführungsrohrbündel dieser Art ist in der GB-A-2 183 000 beschrieben.

Bei den aus der Praxis bekannten Kabelführungsrohrbündeln, von denen die Erfindung ausgeht, wird der Spalt zwischen den Außenrohren von einem Kunststoffstreifen überdeckt, der ein selbständiges Bauteil darstellt und längs seiner beiden Ränder mit den Außenrohren verschweißt wird. Auf diese Weise wird ein Rohrbündelverschluß angestrebt, der sicherstellt, daß Grundwasser und einsickerndes Oberflächenwasser nicht in die Spalträume und Zwischenräume zwischen den einzelnen Kunststoffrohren des Kabelführungsrohrbündels eindringen kann. Diese bekannten Maßnahmen sind im Zuge der Verlegungsmaßnahmen eines Kabelführungsrohrbündels außerordentlich kompliziert. Es kann nicht ausgeschlossen werden, daß die Schweißnaht nicht allen Anforderungen genügt, sei es in festigkeitsmäßiger Hinsicht, sei es in bezug auf eine Abdichtung. Im übrigen stört der Arbeitsaufwand, der erforderlich ist, weil einerseits das Rohraggregat zum Kabelführungsrohrbündel zusammengelegt und in diesem Zustand gehalten werden muß, während andererseits an beiden Außenrohren die Schweißarbeiten durchzuführen sind. Im Ergebnis genügt ein solcher Rohrbündelverschluß durch einen Kunststoffstreifen den Anforderungen nicht.

Der Erfindung liegt die Aufgabe zugrunde, ein Kabelführungsrohrbündel des eingangs beschriebenen Aufbaus zu schaffen, bei dem auf einfache Weise ein sehr wirksamer Rohrbündelverschluß verwirklicht werden kann.

Zur Lösung dieser Aufgabe lehrt die Erfindung, daß an zumindest eines der Außenrohre längs einer Anformlinie eine Rohrbündelverschlußlamelle angeformt ist, mit der im Rohrbündel der Spalt zwischen den Außenrohren überbrückbar ist und die an das freie Außenrohr mit einer Schweißnaht anschweißbar ist, daß die Rohrbündelverschlußlamelle in radialer Richtung eine Breite aufweist, die mit einem Überstand größer ist als der Abstand zwischen der Anformlinie und der Schweißnaht und daß der Überstand einen Begrenzungssteg aufweist, der in Längsrichtung des Kabelführungsrohrbündels die Rohrbündelverschlußlamelle in gestreckter Form fixiert. - Die Erfindung geht von der Erkenntnis aus, daß der eingangs beschriebene Rohrbündelverschluß sehr sicher, auf einfache Weise und sehr wirksam erreicht werden kann, wenn eines der Außenrohre eine Rohrbündelverschlußlamelle gleichsam mitbringt, weil sie angeformt ist, und wenn gleichzeitig durch den Begrenzungssteg sichergestellt ist, daß diese Rohrbündelverschlußlamelle beim Zusammenlegen des Rohraggregates zum Kabelführungsrohrbündel stets eine Position einnimmt, die auf einfache Weise die Herstellung der beschriebenen Schweißnaht durch Anwendung von Druck und Wärme bei Einsatz entsprechender Werkzeuge zuläßt. Die Schweißnaht ist dabei eine durchlaufende Schweißnaht, die vollständig wasserdicht ist, oder aber auch eine Punktschweißnaht, bei der der Abstand der Punkte nicht zu groß ist. Überraschenderweise bewirkt auch eine solche Punktschweißnaht mit einer Mehrzahl von ausreichend dicht gereihten Schweißpunkten einen ausreichenden Verschluß des Rohrbündels gegen eindringendes Wasser. Insoweit wirken zwischen den eng benachbarten Schweißpunkten Oberflächenkräfte und Oberflächenspannungen, die ein Eindringen von Grundwasser oder von einsickerndem Oberflächenwasser verhindern. Von besonderem Vorteil ist die Tatsache, daß der Begrenzungssteg nicht nur beim Verlegen und beim Verschließen eines Rohrbündels die beschriebene Funktion erfüllt, er erlaubt es gleichzeitig bei der Extrusion des Rohraggregates aus thermoplastischem Kunststoff mit Hilfe einer Kunststoffschneckenpresse und geeigneten Werkzeugen die Rohrbündelverschlußlamelle definiert anzuformen. In extrusionstechnischer Hinsicht verhält sich insoweit der Begrenzungssteg nicht anders als eines der Rohre des Rohrbündels, wenn auch der Begrenzungssteg im allgemeinen quer zur Längsrichtung des Rohrbündels geringere Erstreckungen aufweist als es dem Durchmesser der einzelnen Rohre entspricht. Die Kalibrierung des Rohraggregates erfolgt mit üblichen Kalibriereinrichtungen.

Im einzelnen bestehen im Rahmen der Erfindung mehrere Möglichkeiten der weiteren Ausbildung und Gestaltung. So ist eine bevorzugte Ausführungsform der Erfindung dadurch gekennzeichnet, daß die Rohrbündelverschlußlamelle in bezug auf Dicke und Verformbarkeit mit den Verbindungsstegen übereinstimmt. Die Rohrbündelverschlußlamelle kann, wie bereits angedeutet, als durch Anwendung von Druck und Wärme punktschweißbare folienartige Lamelle ausgebildet sein. Sie ist dann auch entsprechend mit einer linienförmigen Schweißnaht anschweißbar. Wird in der beschriebenen Weise gearbeitet, so erreicht man ohne Schwierigkeiten im Bereich der Schweißnaht Verhältnisse, die es erlauben, daß der Überstand längs der Schweißnaht abreißbar ist. Dazu darf die Rohrbündelverschlußlamelle nicht zu dick sein. Der Begrenzungssteg ist zweckmäßigerweise als rohrsteifes Profil ausgeführt, beispielsweise mit rundem Querschnitt.

Im folgenden wird die Erfindung anhand einer lediglich ein Ausführungsbeispiel darstellenden Zeichnung ausführlicher erläutert. Es zeigen in schematischer Darstellung
- Fig. 1: ein nach der Lehre der Erfindung aufgebautes Rohraggregat,
- Fig. 2: das Kabelführungsrohrbündel, welches aus dem Rohraggregat der Fig. 1 zusammengelegt ist und
- Fig. 3 bis 5: entsprechend der Fig. 2 anderer Ausführungsformen von erfindungsgemäßen Kabelführungsrohrbündeln.

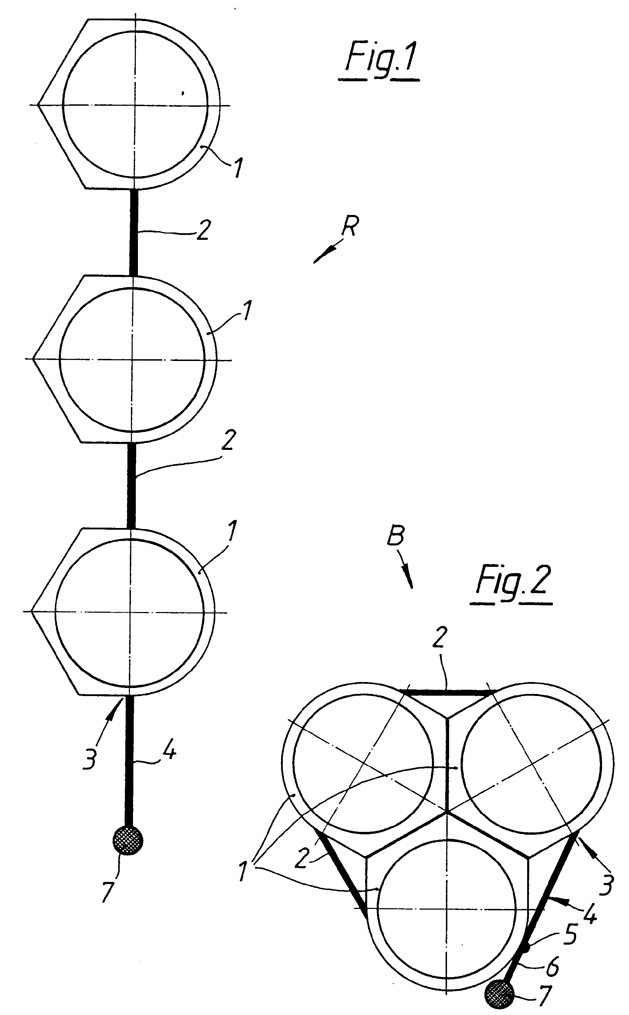

Die in den Figuren im Querschnitt dargestellten Kabelführungsrohrbündel B bestehen im Ausführungsbeispiel aus gleichen Kunststoffrohren 1. Sie könnten aber auch aus Kunststoffrohren 1 unterschiedlichen Durchmessers bestehen. Die Kunststoffrohre 1 sind mit Hilfe von angeformten und verformbaren längslaufenden Verbindungsstegen 2 vereinigt und zu einem ebenen Rohraggregat entbündelbar. Ebene Rohraggregate, aus denen die Kabelführungsrohrbündel B zusammengelegt werden können, werden, gleichsam als Vorprodukt, hergestellt, und zwar durch Extrudieren mit Hilfe einer Kunststoffschneckenpresse und geeigneten Werkzeugen. In der Fig. 1 ist ein solches Rohraggregat R dargestellt worden.

Man entnimmt aus allen Figuren, daß an eines der Außenrohre 1 längs einer Anformlinie 3 eine Rohrbündelverschlußlamelle 4 angeformt ist. Mit der Rohrbündelverschlußlamelle 4 ist im Rohrbündel B der Spalt zwischen den Außenrohren 1 überbrückbar. Die Rohrbündelverschlußlamelle 4 ist an das freie Außenrohr 1 mit einer Schweißnaht 5 anschweißbar, die eine Punktschweißnaht oder eine Linienschweißnaht ist. Im Rahmen der Erfindung liegt es, zwei Rohrbündelverschlußlamellen 4 vorzusehen, die gleichsam überlappt angeordnet werden.

In allen Fällen weist die Rohrbündelverschlußlamelle 4 eine in radialer Richtung gemessene Breite auf, die mit einem Überstand 6 größer ist als der Abstand zwischen der Anformlinie 3 und der Schweißnaht 5. Der Überstand 6 besitzt einen Begrenzungssteg 7, dem im Rahmen der Erfindung besondere Bedeutung zukommt. Er fixiert in Längsrichtung des Kabelführungsrohrbündels B die Rohrbündelverschlußlamelle 4 in gereckter Form, und zwar mit den schon erläuterten Vorteilen.

Die Rohrbündelverschlußlamelle 4 stimmt in bezug auf Dicke und Verformbarkeit mit den Verbindungsstegen 2 überein. Im Ausführungsbeispiel und nach bevorzugter Ausführungsform der Erfindung ist die Rohrbündelverschlußlamelle 4 als durch Anwendung von Druck und Wärme punktschweißbare folienartige Lamelle ausgeführt. Ist sie in dieser Weise punktschweißbar, so kann auch eine linienförmige Schweißnaht 5 hergestellt werden. Immer können die Verhältnisse so eingerichtet werden, daß der Überstand 6 längs der Schweißnaht 5 abreißbar ist. Der Begrenzungssteg 7 ist ein rohrsteifes Profil, im Ausführungsbeispiel mit kreisförmigem Querschnitt.

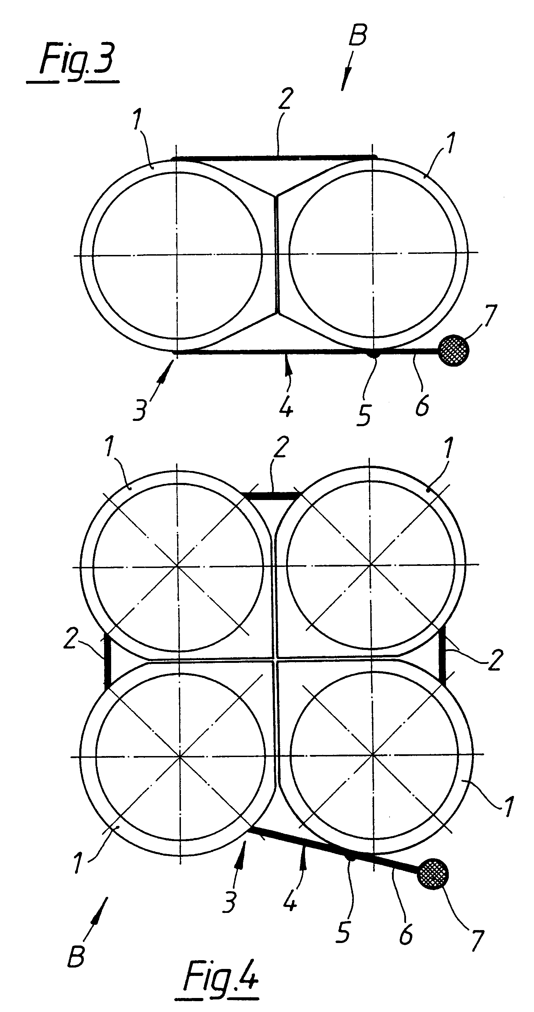

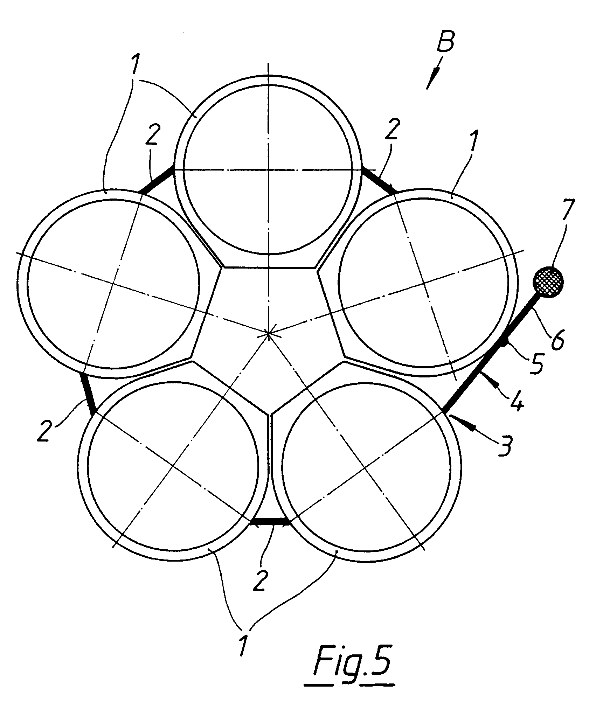

Mit den vorstehenden Erläuterungen verstehen sich ohne weiteres auch die Fig. 3 bis 5 in die im übrigen die gleichen Bezugszeichen eingetragen worden sind. Der Begrenzungssteg 7 kann als Hohlprofil, z.B. in Form eines Röhrchens, oder als massives Profil ausgeführt sein.

## Patentansprüche

1. Kabelführungsrohrbündel aus einer Mehrzahl von Kunststoffrohren, die mit Hilfe von angeformten und verformbaren längslaufenden Verbindungsstegen vereinigt und zu einem ebenen Rohraggregat mit zwei Außenrohren entbündelbar sind, **dadurch gekennzeichnet**, daß an zumindest eines der Außenrohre (1) längs einer Anformlinie (3) eine Rohrbündelverschlußlamelle (4) angeformt ist,
mit der im Rohrbündel (B) der Spalt zwischen den Außenrohren (1) überbrückbar ist und die an das freie Außenrohr (1) mit einer Schweißnaht (5) anschweißbar ist,
daß die Rohrbündelverschlußlamelle (4) in radialer Richtung eine Breite aufweist, die mit einem Überstand (6) größer ist als der Abstand zwischen der Anformlinie (3) und der Schweißnaht (5) und daß der Überstand (6) einen Begrenzungssteg (7) aufweist, der in Längsrichtung des Kabelführungsrohrbündels (B) die Rohrbündelverschlußlamelle (4) in gestreckter Form fixiert.

2. Kabelführungsrohrbündel nach Anspruch 1, dadurch gekennzeichnet, daß die Rohrbündelverschlußlamelle (4) in bezug auf Dicke und Verformbarkeit mit den Verbindungsstegen (2) übereinstimmt.

3. Kabelführungsrohrbündel nach einem der Ansprüche 1 oder 2, dadurch gekennzeichnet, daß die Rohrbündelverschlußlamelle (4) als durch Anwendung von Druck und Wärme punktschweißbare folienartige Lamelle ausgebildet ist.

4. Kabelführungsrohrbündel nach einem der Ansprüche 1 bis 3, dadurch gekennzeichnet, daß der Überstand (6) längs der Schweißnaht (5) abreißbar ist.

5. Kabelführungsrohrbündel nach einem der Ansprüche 1 bis 4, dadurch gekennzeichnet, daß der Begrenzungssteg (7) als rohrsteifes Profil ausgeführt ist.

## Claims

1. A cable guide tube unit consisting of several plastic tubes combined by moulded and mouldable longitudinal connecting ribs being disengable to form a level tube unit including two external tubes, **characterised** in that at least one of the external tubes (1) includes a tube unit sealing disk (4) moulded longitudinally along a moulded line (3),
bridging the gap between the external tubes (1) within the tube unit (B) and being weldable to the free external tube (1) by a welding seam (5),
and that the radial width of the tube unit sealing disk (4) exceeds the distance between the moulded line (3) and the weld (5) by a projection (6), with the projection (6) having an end rib (7) fixing the tube unit sealing disk (4) when stretched in longitudinal direction to the cable guide tube unit (B).

2. A cable guide tube unit according to claim 1, **characterised** in that the tube unit sealing disk (4) corresponds in thickness and mouldability to the connecting ribs (2).

3. A cable guide tube unit according to one of claims 1 or 2, **characterised** in that the tube unit sealing disk (4) consists of a foil-type disk being spot weldable under pressure and heat.

4. A cable guide tube unit according to one of claims 1 to 3, **characterised** in that the projection (6) being removable along the weld. (5).

5. A cable guide tube unit according to one of claims 1 to 4, **characterised** in that the end rib (7) is a rigid tubular section.

## Revendications

1. Faisceau de conduits pour câbles composé de plusieurs conduits en plastique, qui sont réunis à l'aide de barrettes de raccordement longitudinales préformées et déformables et peuvent être séparés pour former un groupe de conduits plan avec deux conduits extérieurs, **caractérisé par le fait** que sur au moins un des conduits extérieurs (1), une lamelle d'obturation du faisceau de conduits (4) est préformée le long d'une ligne de forme (3),
lamelle avec laquelle la fente existant dans le faisceau de conduits (B) entre les conduits extérieurs (1) peut être obturée et qui peut être soudée sur le conduit extérieur libre (1) par une soudure (5).
que la lamelle d'obturation du faisceau de conduits (4) présente dans le sens radial une largeur qui, saillie (6) comprise, est plus grande que l'écart entre la ligne de forme (3) et la soudure (5) et que la saillie (6) a une barrette de limitation (7) qui fixe dans le sens longitudinal du faisceau de conduits pour câbles (B) la lamelle d'obturation du faisceau de conduits (4) sous forme tendue.

2. Faisceau de conduits pour câbles selon la spécification 1, **caractérisé par le fait** que la lamelle d'obturation du faisceau de conduits (4) a une épaisseur et une déformabilité identiques aux barrettes de raccordement (2).

3. Faisceau de conduits pour câbles selon une des spécifications 1 ou 2, **caractérisé par le fait** que la lamelle d'obturation du faisceau de conduits (4) est en film soudable par points par application de pression et de chaleur.

4. Faisceau de conduits pour câbles selon une des spécifications 1 à 3, **caractérisé par le fait** que la saillie (6) peut être arrachée le long de la soudure (5).

5. Faisceau de conduits pour câbles selon une des spécifications 1 à 4, **caractérisé par le fait** que la barrette de limitation (7) est un profilé tubulaire rigide.
